# EUROPEAN PATENT APPLICATION

(11) **EP 4 447 262 A1**
(43) Date of publication of application: **16.10.2024**
(21) Application number: 24164655.3
(22) Date of filing: 19.03.2024
(51) Int. Cl.: H02J 7/34, H02M 1/36

(54) **ISOLATED SOLID-STATE ACTIVE PRE-CHARGER**

(30) Priority: 21.03.2023 US 202318187269
(71) Applicant: Sensata Technologies, Inc., Attleboro, MA 02703 (US)
(72) Inventor: KOUWEN, Thomas Gerjen Hendrik, Attleboro MA 02703 (US); JODOIN, Jonathan M., Attleboro MA 02703 (US)
(74) Representative: Page, White & Farrer Germany LLP

(57) **Abstract**

In an embodiment, a power supply system having an isolated solid-state active precharger includes a high voltage battery; a capacitive circuit; and a pre-charging circuit configured to charge the capacitive circuit from the high voltage battery, the pre-charging circuit including a flyback transformer and having a primary side and a secondary side corresponding to a primary coil and a secondary coil of the flyback transformer, wherein the high voltage battery is connected to the primary side, wherein the capacitive circuit is coupled to the secondary side, and wherein charge is fed back to the high voltage battery when an output voltage of the secondary side is substantially equal to or greater than a charge in the high voltage battery.

## Description

### BACKGROUND

Electromechanical switching devices, such as contactors and relays, are designed to carry a certain amount of electrical current for certain periods of time. Such devices are particularly important in electric vehicles. Typically, electric vehicles include one or more high voltage batteries connected, via a main contactor, to a vehicle power distribution system for powering an electric motor. The main contactor is typically an electromechanical switch that opens or closes high current paths between the battery packs and the vehicle power distribution system. To facilitate switching in a high voltage system, a pre-charge circuit is used to charge an output capacitor to the battery voltage before connecting the high voltage system to the high voltage battery pack.

### SUMMARY

Embodiments in accordance with the present disclosure are directed to apparatuses, systems, and methods for an isolated solid-state active pre-charger. The circuitry of the pre-charger uses a two-switch flyback converter topology in which a high voltage battery pack is galvanically isolated from a load. A capacitive circuit is pre-charged by the pre-charger circuitry before connecting the load to the high voltage battery pack. Solid-state switches are used to eliminate moving parts found in relays and other electromechanical switches, thus increasing reliability. Excess or unneeded charge is fed back to the battery when the output voltage is equivalent to the battery pack charge voltage. Diodes used for leakage inductance clamping may also be utilized to feed the excess charge back to the battery.

A particular embodiment is directed to a power supply system having an isolated solid-state active precharger, the power supply system including a high voltage battery; a capacitive circuit; and a pre-charging circuit configured to charge the capacitive circuit from the high voltage battery, the pre-charging circuit including a flyback transformer and having a primary side and a secondary side corresponding to a primary coil and a secondary coil of the flyback transformer, where the high voltage battery is connected to the primary side, where the capacitive circuit is coupled to the secondary side, and where charge is fed back to the high voltage battery when an output voltage of the secondary side is substantially equal to or greater than a charge in the high voltage battery. In some examples, the high voltage battery connected on the primary side and the capacitive circuit connected on the secondary side are galvanically isolated. In some examples, the output voltage is measured by a reflected voltage in the primary side during a demagnetizing phase.

In some examples, the primary side includes one or more battery diodes coupled to the flyback transformer and the high voltage battery, where the one or more battery diodes provide inductance leakage clamping and feeds charge to the high voltage battery when the output voltage of the secondary side is substantially equal to or greater than the charge in the high voltage battery.

In some examples, the primary side includes one or more solid-state switches coupled between the high voltage battery and the flyback transformer, where the one or more solid-state switches are configured to change the flyback transformer between a magnetizing phase and a demagnetizing phase. In some variations, the one or more solid-state switches are metal-oxide-semiconductor field-effect transistors. In some examples, the one or more solid-state switches are controlled by one or more gate drivers having an isolated power source. In some variations, a current controller is configured to: measure current in the primary side and in the secondary side; and provide a control signal to the one or more gate drivers.

In some examples, the secondary side includes an output diode coupled between the flyback transformer and the capacitive circuit.

In some examples, the power supply system further includes a main contactor circuit coupled to the high voltage battery and the capacitive circuit in parallel with the pre-charge circuit, the main contactor circuit including a positive-terminal contactor and a negative terminal contactor; and a load coupled to the main contactor circuit in parallel with the capacitive circuit. In some variations, the load is provided by a vehicle power distribution system. In some examples, the capacitive circuit is charged by the pre-charge circuit prior to connecting the load to the high voltage battery through the main contactor circuit.

Another embodiment is directed to an electric vehicle having a power supply system including an isolated solid-state active precharger, the electric vehicle including a high voltage battery; a capacitive circuit; a pre-charging circuit configured to charge the capacitive circuit from the high voltage battery, the pre-charging circuit including a flyback transformer and having a primary side and a secondary side corresponding to a primary coil and a secondary coil of the flyback transformer, where the high voltage battery is connected to the primary side, where the capacitive circuit is coupled to the secondary side, and where charge is fed back to the high voltage battery when an output voltage of the secondary side is substantially equal to or greater than a charge in the high voltage battery; a main contactor circuit coupled to the high voltage battery and the capacitive circuit in parallel with the pre-charge circuit, the main contactor circuit including a positive-terminal contactor and a negative terminal contactor; and a vehicle power distribution system connected across the main contactor circuit and the capacitive circuit.

Another embodiment is directed to a method of operating a power supply system including an isolated solid-state active precharger, the method including coupling a pre-charging circuit to a high voltage battery and a capacitive circuit, the pre-charging circuit including a flyback transformer, where the pre-charging circuit has a primary side and a secondary side corresponding to a primary coil and a secondary coil of the flyback transformer, where the high voltage battery is connected to the primary side, and where the capacitive circuit is coupled to the secondary side. The method also includes activating one or more solid-state switches on the primary side such that current flows from the high voltage battery to the primary coil. The method also includes deactivating the one or more solid-state switches such that current flows from the secondary coil to the capacitive circuit. The method also includes, in response to an output voltage of the pre-charging circuit being substantially equal to or greater than a charge in the high voltage battery, feeding charge back to the high voltage battery.

These and other features, aspects, and advantages of the present disclosure will become better understood when the following detailed description is read with reference to the accompanying drawings in which like characters represent like parts throughout the drawings.

### BRIEF DESCRIPTION OF THE DRAWINGS

FIG. 1 is an example circuit schematic for an example isolated solid-state active pre-charger in accordance with at least one embodiment of the present disclosure.
FIG. 2 is an example circuit schematic for another example isolated solid-state active pre-charger in accordance with at least one embodiment of the present disclosure.
FIG. 3 is a flowchart of an example method for operating a power system supply that includes an isolated solid-state active pre-charger in accordance with at least one embodiment of the present disclosure.

### DETAILED DESCRIPTION

The terminology used herein for the purpose of describing particular examples is not intended to be limiting for further examples. Whenever a singular form such as "a", "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises", "comprising", "includes" and/or "including", when used, specify the presence of the stated features, integers, steps, operations, processes, acts, elements and/or components, but do not preclude the presence or addition of one or more other features, integers, steps, operations, processes, acts, elements, components and/or any group thereof.

It will be understood that when an element is referred to as being "connected" or "coupled" to another element, the elements may be directly connected or coupled via one or more intervening elements. If two elements A and B are combined using an "or", this is to be understood to disclose all possible combinations, i.e. only A, only B, as well as A and B. An alternative wording for the same combinations is "at least one of A and B". The same applies for combinations of more than two elements.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Like numbers refer to like or similar elements throughout the description of the figures, which may be implemented identically or in modified form when compared to one another while providing for the same or a similar functionality.

Many pre-charge systems for electric vehicle battery connect units are resistive-based. The pre-charge circuit includes a relay and a resistor (typically in the 20-40 Ohm range). A 12 Volt (V) signal closes the relay and bridges the main contactor. However, high thermal dissipation in larger vehicles leads to physically large solutions. Further, the resistive pre-charger never charges the capacitance to 100% of the battery voltage. This requires that the main contactor always has to close into a voltage differential, leading to wear. As pre-charge commences, a current surge is initiated and limited solely by the resistive value and the battery voltage. As the capacitance is charged, current quickly drops. A voltage difference across a main contactor allows sudden flow of current, limited only by the low resistance of the high voltage battery and the vehicle electrical distribution system, when the contactor is closed. This may reduce the life of the contactor. When a resistor is used in the pre-charge circuit, the voltage across the main contactor can never be zero because of the resistance. In addition, measurement errors are introduced as two sensor values must be measured and processed. Depending on the resolution of the voltage measurement, it may not be feasible to determine a difference that is close to zero. These measurement errors may stack up under certain conditions and allow the main contactor to be closed with a voltage difference greater than zero leading to a lower contactor life.

Embodiments in accordance with the present disclosure provide a solid-state (e.g., no moving parts), galvanically isolated method of pre-charging capacitors in electronic systems such as electric motor inverters. In some examples, a pre-charge system includes a self-oscillating, current controlled two-switch flyback transformer powered by a 12V control signal. An output voltage is effectively "compared" to the battery voltage through the reflected voltage during the demagnetization phase of the transformer cycle. If the output voltage is approximately equal to the battery voltage, excess or unneeded charge voltage is recycled back into the battery. Diodes used for leakage inductance clamping may also be utilized to recycle charge back to the battery, thus reducing or eliminating the need for additional components. Solid-state pre-charge that is not based on resistive current limiting has significant efficiency benefits. Resistive based pre-charging has an approximately 50% efficiency. Solid-state pre-charge increases this to in excess of 85% (with potential above 95%). This significantly reduces thermal dissipation and therefore does not require any thermal management.

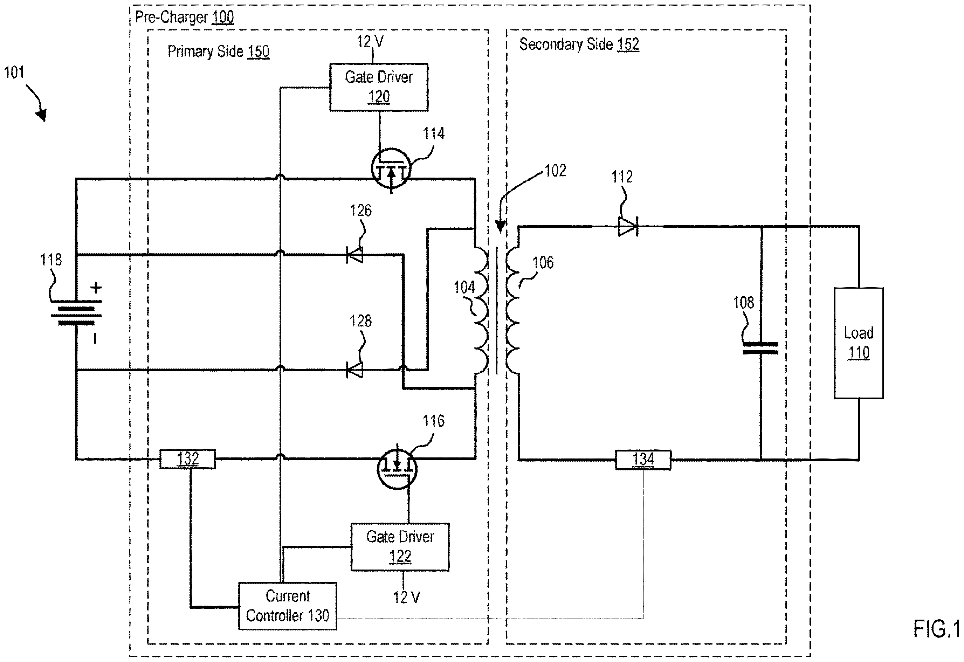

Exemplary methods and apparatuses for a battery configuration contactor in accordance with the present disclosure are described with reference to the accompanying drawings, beginning with FIG. 1. FIG. 1 shows a circuit diagram of an example isolated solid-state active pre-charger system 101 in accordance with at least one embodiment of the present disclosure. The pre-charger system includes a pre-charger 100 coupled to a high voltage battery 118 (e.g., a 400 V or more battery) for pre-charging a capacitive circuit including one or more output capacitors 108 coupled to a load 110 across a direct current bus. The pre-charger 100 implements a two-solid-state switch flyback converter in which excess charge is recycled to the battery when the output voltage is substantially the same as or greater than the battery voltage. The pre-charger 100 includes a flyback transformer 102 having a primary-side coil 104 and a secondary side coil 106. The secondary-side coil 106 is connected in parallel with an output capacitor 108 of the pre-charger 100 and to the load 110. A diode 112 controls the charging of the output capacitor 108. The primary-side coil 104 is connected to a first solid-state switch 114 on a first terminal of the of the primary-side coil 104 and to a second solid-state switch 116 at a second terminal of the primary-side coil 104.

In some examples, the first solid-state switch 114 and the second solid-state switch 116 are power transistors such as a metal-oxide-semiconductor field-effect transistor (MOSFET). The first solid-state switch 114 is operable to connect the positive terminal of the high voltage battery 118 and the primary-side coil 104. The first solid-state switch 114 is driven by a gate driver 120 operating off an isolated 12 V power supply. The second solid-state switch 116 is operable to connective the negative terminal of the high voltage battery 118 and the primary-side coil 104. The second solid-state switch is driven by a gate driver 122 operating off the isolated 12 V power supply. The use of solid-state switches 114, 116, compared to electromechanical switches and relays, is advantageous in that solid-state switches 114, 116 cannot weld and rarely fail to actuate.

The primary side coil is also connected to the positive terminal of the high voltage battery 118 through a battery diode 126 and to the negative terminal of the high voltage battery 118 through a battery diode 128. In some examples, the battery diodes 126, 128 function as inductance leakage clamping diodes. In some examples, the current-voltage characteristics of the diodes 126, 128 is selected such that a reflected voltage in the primary-side coil that is equal to or greater than the battery charge of the high voltage battery forward-biases the battery diodes 126, 128 such that charge flows back to the high voltage battery thus preventing further increase in load.

In view of the above arrangement, it is apparent that the pre-charger 100 includes a primary side 150 including a high voltage battery 118 that is galvanically isolated from a secondary side 152 that includes a load 110. The pre-charger 100 also includes a current controller 130 configured to detect current on the primary side and the secondary side. In one example, the current controller 130 is connected to a sense resistor 132 connected between the solid-state switch 116 and the negative terminal of the high voltage battery 118. In this example, the current controller is also connected to a sense resistor 134 between the secondary-side coil 106 and the load 110. The current sensing resistors 132, 134 may be a small resistance value to minimize the voltage drop across the pre-charger 100. The current controller 130 may monitor the voltage across the current sense resistors 132, 134 to control the current through the pre-charger 100. Other current sensing schemes may be possible depending on the current measurement technology selected.

The current controller 130 provides a control signal to the gate drivers 120, 122 of solid-state switches 114, 116. Thus, the current controller 130 induces the solid-state switches 114, 116 to open and close. The current controller 130 may perform this current control using electronic circuitry or some combination of electronic circuitry and microprocessor based software controls. A desired output current range may be comprised of a lower value and an upper value. The current flowing through the pre-charge circuit may be measured. When the output current is less than the desired lower value, the switching device may be switched on. When the output current is above the desired upper value, the switching device may be switched off.

Operation of the pre-charger 100 includes two phases. In a first phase (or magnetizing phase), the solid-state switches 114, 116 are closed, allowing current to flow from the high voltage battery 118 to the primary-side coil 104. Current starts to flow through the primary-side coil 104, and the output diode 112 on the secondary side 152 is reverse-biased due to the transformer polarity. Therefore, all the energy is stored to the transformer 102 while the load current is supplied by the output capacitor 108. Current on the primary side 150 increases until reaching a threshold set in the current controller 130. In a second phase (or demagnetizing phase), the current controller 130 detects that the current on the primary side 150 has reached the threshold and supplies a control signal to turn off solid-state switches 114, 116, thus opening the primary side solid-state switches 114, 116. When the solid-state switches 114, 116 are opened, the secondary side 152 starts conducting and stored energy in the transformer 102 is transferred to the output, thus supplying the load 110 and the charging output capacitor 108. The output diode 112 on the secondary side 152 becomes forward-biased. At the same time, a reflected voltage is applied over the primary-side coil 104. Leakage inductance on the primary side is fed back to the high voltage battery through the battery diodes 126, 128. If the load voltage is substantially equal to the charge voltage in the high voltage-battery, battery diodes 126, 128 prevent a further increase of load due to the reflected voltage on the primary-side coil 104 of the transformer 102 being higher than the voltage of the high voltage battery 118. Excess or unneeded charge, due to the output voltage in the capacitor 108 being equivalent to the battery voltage, is fed back to the high voltage battery.

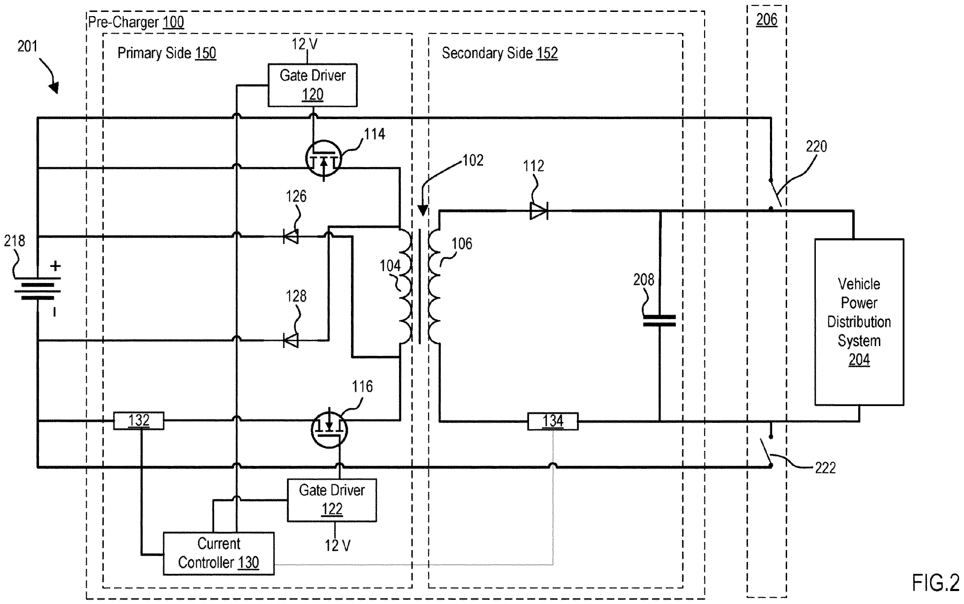

For further explanation, FIG. 2 shows a circuit diagram of an example electric vehicle power supply system 201 using an example isolated solid-state active pre-charger 100 in accordance with at least one embodiment of the present disclosure. In the example system 201, a high voltage battery pack 218 of an electric vehicle is couplable to the pre-charger 100 through a main contactor circuit 206 including a positive contactor 220 and a negative contactor 222 operable by a single throw. The pre-charger 100 is coupled to an output capacitor 208 for a load supplied by a vehicle power distribution system 204 (e.g., connected to an electric motor). The high voltage battery pack 218 is also directly couplable to the output capacitor 208 and load supplied by a vehicle power distribution system 204 through the main contactor circuit 206. In some examples, the main contactor circuit 206 is a main contactor of a battery disconnect unit (BDU) that includes one contact coupled to the positive terminal of the high voltage battery pack 218 and another contact coupled to the negative terminal of the high voltage battery pack 218. In some examples, the main contactor circuit 206 has a first state in which the high voltage battery pack 218 is coupled to the pre-charger 100 to pre-charge the output capacitor 208. The contactor has a second state in which the high voltage battery pack 218 is disconnected from the pre-charger 100 and is connected to the vehicle power distribution system 204, for example, for vehicle propulsion. Thus, to pre-charge the output capacitor 208, the output capacitor 208 is first connected to the pre-charger 100 before directly connecting the high voltage battery pack 218 and output capacitor 208 to a high voltage system such as the vehicle power distribution system 204. When the pre-charge operation is completed, the main contactor circuit 206 may be switched on and the pre-charger 100 switched off. After switching the main contactor circuit 206 on, the load voltage and the battery pack voltage may equalize, and current may flow through the main contactor circuit 206. In some examples the main contactor circuit 206 includes an integrated fuse.

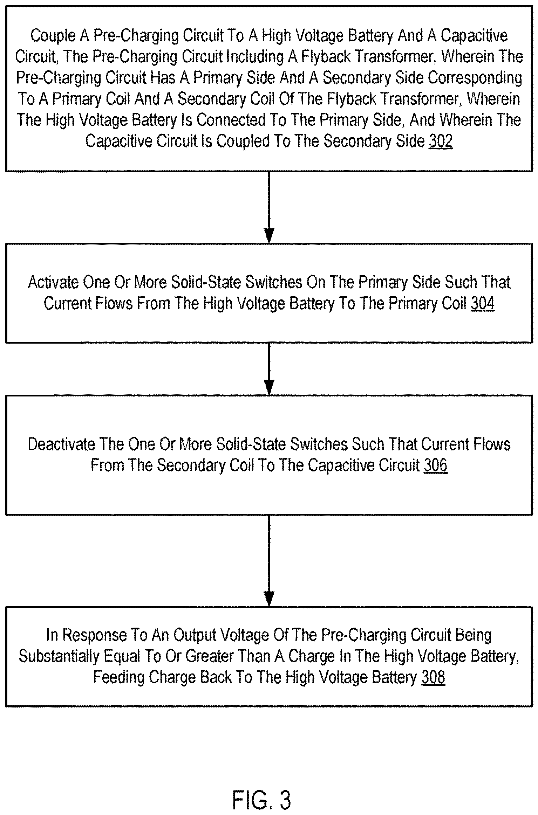

For further explanation, FIG. 3 sets forth a flow chart of an example method of operating an isolated solid-state active pre-charger in accordance with at least one embodiment of the present disclosure. The method of FIG. 3 includes coupling 302 a pre-charging circuit to a high voltage battery pack and a capacitive circuit, the pre-charging circuit including a flyback transformer, wherein the pre-charging circuit has a primary side and a secondary side corresponding to a primary coil and a secondary coil of the flyback transformer, wherein the high voltage battery is connected to the primary side, and wherein the capacitive circuit is coupled to the secondary side. In some examples, the high voltage battery connected on the primary side and the capacitive circuit connected on the secondary side are galvanically isolated. In some examples, the primary side includes one or more solid-state switches coupled between the high voltage battery and the primary-side coil of the flyback transformer. The one or more solid-state switches are configured to change the flyback transformer between a magnetizing phase and a demagnetizing phase. In some variations, the one or more solid-state switches are metal-oxide-semiconductor field-effect transistors. In some examples, the one or more solid-state switches are controlled by one or more gate drivers having an isolated power source. In some variations, a current controller is configured to measure current in the primary side and in the secondary side and provide a control signal to the one or more gate drivers. In some examples, the primary side also includes one or more battery diodes between the flyback transformer and the high voltage battery, where the one or more battery diodes provide inductance leakage clamping. In some examples, the secondary side includes an output diode coupled between the flyback transformer and the capacitive circuit. The capacitive circuit may include one or more output capacitors.

The method of FIG. 3 also includes activating 304 one or more solid-state switches on the primary side such that current flows from the battery pack to the primary coil. In a first phase (or magnetizing phase), the solid-state switches are closed (switched on), allowing current to flow from the high voltage battery to the primary-side coil of the flyback transformer. Current starts to flow through the primary-side coil, and the output diode on the secondary side is reverse-biased due to the transformer polarity. Therefore, all the energy is stored to the flyback transformer while the load current is supplied by the capacitive circuit on the secondary side. Current on the primary side increases until reaching a threshold set, for example, in the current controller.

The method of FIG. 3 also includes deactivating 306 the one or more solid-state switches such that current flows from the secondary coil to the capacitive circuit. In a second phase (or demagnetizing phase), the current controller, for example, detects that the current on the primary side has reached the threshold and supplies a control signal to turn off the solid-state switches, thus opening the primary side solid-state switches. When the solid-state switches are opened, the secondary side starts conducting and stored energy in the flyback transformer is transferred to the output, thus charging output capacitor 108. The output diode on the secondary side becomes forward-biased. At the same time, a reflected voltage is applied over the primary-side coil. Leakage inductance on the primary side is fed back to the high voltage battery through the battery diodes.

The method of FIG. 3 also includes, in response to an output voltage of the pre-charging circuit being substantially equal to or greater than a charge in the high voltage battery, feeding 308 charge back to the high voltage battery. If the load voltage is substantially equal to the charge voltage in the high voltage-battery, the battery diodes prevent a further increase of load due to the reflected voltage on the primary-side coil of the transformer being higher than the voltage of the high voltage battery. Excess or unneeded charge, due to the output voltage in the capacitive circuit being equivalent to the battery voltage, is fed back to the high voltage battery through the forward-biased battery diodes.

In view of the foregoing, it will be appreciated that an isolated solid-state active pre-charger in accordance with the present disclosure provides a number of advantages, including but not limited to:
- an absence of moving parts, such as relays, that can weld closed or fail to actuate;
- galvanic isolation between battery and all loads;
- a reduction of thermal management requirements;
- faster pre-charging through closed loop current control;
- accurate 100% completion of pre-charge (e.g., compared to less than 100% for resistive based solutions);
- isolated output enables easier use of an integrated dual contactor between the battery and load (positive and negative switched with a single dual pole contactor).

It will be understood from the foregoing description that modifications and changes may be made in various embodiments of the present disclosure without departing from its true spirit. The descriptions in this specification are for purposes of illustration only and are not to be construed in a limiting sense. The scope of the present disclosure is limited only by the language of the following claims.

## Claims

1. A power supply system having an isolated solid-state active precharger, the power supply system comprising:
a high voltage battery;
a capacitive circuit; and
a pre-charging circuit configured to charge the capacitive circuit from the high voltage battery, the pre-charging circuit including a flyback transformer and having a primary side and a secondary side corresponding to a primary coil and a secondary coil of the flyback transformer, wherein the high voltage battery is connected to the primary side, wherein the capacitive circuit is coupled to the secondary side, and wherein charge is fed back to the high voltage battery when an output voltage of the secondary side is substantially equal to or greater than a charge in the high voltage battery.

2. The power supply system of claim 1, wherein the high voltage battery connected on the primary side and the capacitive circuit connected on the secondary side are galvanically isolated.

3. The power supply system of claim 1, wherein the output voltage is measured by a reflected voltage in the primary side during a demagnetizing phase.

4. The power supply system of claim 1, wherein the primary side includes one or more battery diodes coupled to the flyback transformer and the high voltage battery, wherein the one or more battery diodes provide inductance leakage clamping and feeds charge to the high voltage battery when the output voltage of the secondary side is substantially equal to or greater than the charge in the high voltage battery.

5. The power supply system of claim 1, wherein the primary side includes one or more solid-state switches coupled between the high voltage battery and the flyback transformer, wherein the one or more solid-state switches are configured to change the flyback transformer between a magnetizing phase and a demagnetizing phase.

6. The power supply system of claim 5, wherein the one or more solid-state switches are metal-oxide-semiconductor field-effect transistors.

7. The power supply system of claim 5, wherein the one or more solid-state switches are controlled by one or more gate drivers having an isolated power source.

8. The power supply system of claim 7, wherein a current controller is configured to:
measure current in the primary side and in the secondary side; and provide a control signal to the one or more gate drivers.

9. The power supply system of claim 1, wherein the secondary side includes an output diode coupled between the flyback transformer and the capacitive circuit.

10. The power supply system of claim 1 further comprising:
a main contactor circuit coupled to the high voltage battery and the capacitive circuit in parallel with the pre-charge circuit, the main contactor circuit including a positive-terminal contactor and a negative terminal contactor; and
a load coupled to the main contactor circuit in parallel with the capacitive circuit.

11. The power supply system of claim 10, wherein the load is provided by a vehicle power distribution system.

12. The power supply system of claim 10, wherein the capacitive circuit is charged by the pre-charge circuit prior to connecting the load to the high voltage battery through the main contactor circuit.

13. An electric vehicle having a power supply system including an isolated solid-state active precharger, the electric vehicle comprising:
a high voltage battery;
a capacitive circuit;
a pre-charging circuit configured to charge the capacitive circuit from the high voltage battery, the pre-charging circuit including a flyback transformer and having a primary side and a secondary side corresponding to a primary coil and a secondary coil of the flyback transformer, wherein the high voltage battery is connected to the primary side, wherein the capacitive circuit is coupled to the secondary side, and wherein charge is fed back to the high voltage battery when an output voltage of the secondary side is substantially equal to or greater than a charge in the high voltage battery;
a main contactor circuit coupled to the high voltage battery and the capacitive circuit in parallel with the pre-charge circuit, the main contactor circuit including a positive-terminal contactor and a negative terminal contactor; and
a vehicle power distribution system connected across the main contactor circuit and the capacitive circuit.

14. A method of operating a power supply system including an isolated solid-state active precharger, the method comprising:
coupling a pre-charging circuit to a high voltage battery and a capacitive circuit, the pre-charging circuit including a flyback transformer, wherein the pre-charging circuit has a primary side and a secondary side corresponding to a primary coil and a secondary coil of the flyback transformer, wherein the high voltage battery is connected to the primary side, and wherein the capacitive circuit is coupled to the secondary side;
activating one or more solid-state switches on the primary side such that current flows from the high voltage battery to the primary coil;
deactivating the one or more solid-state switches such that current flows from the secondary coil to the capacitive circuit; and
in response to an output voltage of the pre-charging circuit being substantially equal to or greater than a charge in the high voltage battery, feeding charge back to the high voltage battery.

15. The method of claim 14, wherein the high voltage battery connected on the primary side and the capacitive circuit connected on the secondary side are galvanically isolated.

16. The method of claim 14, wherein the output voltage is measured by a reflected voltage in the primary side during a demagnetizing phase.

17. The method of claim 14, wherein the primary side includes one or more battery diodes coupled to the flyback transformer and the high voltage battery, wherein the one or more battery diodes provide inductance leakage clamping and feeds charge to the high voltage battery when the output voltage of the secondary side is substantially equal to or greater than the charge in the high voltage battery.

18. The method of claim 14, wherein the one or more solid-state switches are coupled between the high voltage battery and the flyback transformer, wherein the one or more solid-state switches are configured to change the flyback transformer between a magnetizing phase and a demagnetizing phase.

19. The method of claim 18, wherein the one or more solid-state switches are controlled by one or more gate drivers having an isolated power source.

20. The method of claim 19, wherein a current controller is configured to: measure current in the primary side and in the secondary side; and provide a control signal to the one or more gate drivers.
